# EUROPEAN PATENT APPLICATION

(11) **EP 4 187 424 A1**
(43) Date of publication of application: **31.05.2023**
(21) Application number: 22206350.5
(22) Date of filing: 09.11.2022
(51) Int. Cl.: G06F 21/64, G06Q 50/18, G06F 21/31

(54) **DOCUMENT AUTHENTICATION SYSTEM AND METHOD**

(30) Priority: 24.11.2021 HU 2100403
(71) Applicant: OTP Bank Nyrt., 1051 Budapest (HU)
(72) Inventor: OLÁH, István György, H-2120 Dunakeszi (HU); KOFRÁN, László, H-1042 Budapest (HU); TIRCSI, Ferenc, H-2030 Érd (HU); KISS, Attila Balázs, H-2462 Martonvásár (HU)
(74) Representative: Danubia Patent & Law Office LLC

(57) **Abstract**

A computer-implemented method for document authentication is disclosed, wherein a document of a contract between a service provider and a customer is provided with bilateral authentication, wherein the customer uses a computing device (20) to connect to a service provider application running on a remote server through a communication channel. In the service provider application, the customer is identified with strong customer authentication using a request management means (11), and the login data relating to a login procedure are stored in a first database (15). Document authentication data relating to the document to be authenticated and personal data of the customer are obtained by a document management means (12), and said data are transmitted to a document generation means (13). A personalized document is generated by the document generation means (13), and it is provided with a time stamp of the service provider. The time-stamped personalized document is then sent to the customer. A customer authentication request is sent to the customer by an authentication means (14). Customer authentication data entered by the customer are received (190) by the authentication means (14) and stores in the first database (15). A hash value is generated (200) by the document management means (12) on the basis of the login data, the document authentication data, the customer authentication data and a unique identifier of the displayed document. The hash value is transmitted (210) to the document generation means (13). The hash value is placed (220) by the document generation means (13) in a visible manner on the document to be authenticated. A combination of the time-stamped, personalized document and the hash value is provided (230) by the document generation means (13) with the service provider's digital signature, thereby creating a document authenticated by both the customer and the service provider. The authenticated document is permanently stored in a second database (16). The request management means (11) is then notified by the document management means (12) about the successful completion of the document authentication.

## Description

Nowadays, there is an increasing demand in the various service sectors for the conclusion of individual contracts online, without the requirement of personal appearance. Due to the explosive development of the online service space and especially the emergency situation caused by the coronavirus, it became necessary to expand the group of electronic services that do not involve a personal appearance.

One of the most strictly regulated service sectors is the financial sector, where the advancement of Fintech and Bigtech companies, the development of multi-banking services, and the needs of the younger generation, which avoids conservative banking, necessitate the continuous development of banking services. The present invention provides a solution for making legal declarations made electronically, which also meets the legal requirements of written form, and for their appropriate recording and management, which can be used in all service sectors. However, in this description, the invention will be presented through the regulations for the most strictly regulated financial sector, since if the invention can meet the requirements in this area, it will certainly be applicable in any other sector for making legal declarations that are legally considered to be written electronically.

In addition to the digitization of daily financial affairs, one of the biggest challenges is currently the binding of contracts and legal declarations to customer service points (e.g. bank branch offices), i.e. to personal administration. Although most banks now have audited channels suitable for the conclusion of electronic contracts, access to the electronic channel itself still requires the conclusion of a contract which (except for cases based on direct and indirect customer identification, which have not been widespread yet enough) requires personal contact at the bank's customer service point, so fully digital contracting in the banking sector is still available only to a limited extent. One of the main reasons for this is that customers often do not have electronic signatures.

The following alternative solutions are currently widely used by financial service providers for remote electronic document authentication on the customer's side (i.e. without requiring the presence of the customer).
a) AVDH document authentication: On the AVDH service page of NISZ Zrt. (https://niszavdh.gov.hu/index), even citizens without an electronic signature can upload and authenticate documents, thereby fully participating in electronic administration.
b) Real-time (i.e. direct) customer identification: Real-time video bank customer identification enables online contracts, but the process is time-consuming for the customer and costly and labor-intensive for the bank.
c) Non-realtime (i.e. indirect) customer identification: Non-realtime customer identification also enables online contracting. In this case, the customer's identification is based on facial recognition and document identification performed by an external third party. The use of the new type of ID card with an optional eSIGN function for this purpose has not become widespread yet.
d) Electronic signature issued by an external service provider (Certificate Authority): This solution does not always require personal administration at the external service provider, but as a fee-based service, it cannot be expected to be widely used among natural person customers.

There is a need therefore to develop a globally usable electronic contract conclusion solution, with the help of which a bank (or any other service provider) can make use of the potential inherent in audited electronic channels and can provide its customers with the opportunity for any currently paper-based contract conclusion process (i.e. requiring a personal appearance) to use a purely electronic form of concluding a contract, without the customer needing an electronic signature or personal administration.

Due to the current legal regulations and the supervisory regulations for the financial sector, a contract between a financial service provider and the customer, or a legal declaration made by the customer to the financial service provider, can be accepted in fully electronic form if:
- it was accepted by both parties;
- the fact of acceptance can be proven by both parties, so the WHO-WHAT-WHEN triple conjunctive condition system related to the contract is recorded and stored in a way that can be proven by both parties;
- the content of the document viewed by the customer and constituting the legal declaration is stored by both parties in an unchanged and retrievable form;
- the electronic channel designated for concluding the contract has the documentation required by the financial supervisory authority.

The document US 10,977,432 describes a procedure for the electronic signing of a contract between two customers. During the procedure, the customer sends the contract file to a server; the server converts the contract file into a contract image, then generates a respective contract identifier both for the contract file and the contract image, which it sends to the customer together with the contract image; the server receives the contract identifier sent by the customer, the data on the signature position and the identity data of the signer, where the identity data received by the server can be, for example, the username used by the signer, the contact information of the signer, or a digital certificate; the server forwards the contract image, the contract ID and the data to another customer; the server receives the image authenticated by the contract sent by the other customer, then the server acquires and compares the image authenticated by the contract with the document of the contract in accordance with the contract identifier, which determines whether the content of the image authenticated by the contract is the same as the content of the contract; after the server receives the contract ID sent by the other customer and the signature of the contract image, it writes the signature image into the contract file associated with the contract ID. The disadvantage of this solution is that it can only be used to sign a pre-formed contract, however, during the verification of the authenticity of the data, the system performs an image-based comparison.

The document US 7,822,690 describes a system and a method for the generation of electronic documents. The system includes an electronic document generation mechanism, an encrypted digital certificate generator, a device for coordinating the processing of the electronic documents, a packaging mechanism for finalizing and authenticating the electronic documents, a tracking log for recording relevant electronic document data, and a transmission protocol for the transfer of the ownership of the electronic documents. During the procedure presented in the document, the data block is converted into a digital signature using a hash algorithm, and then the hash value is encrypted with the private key of a digital certificate. To verify the signature, the encrypted hash value is decoded with the public key of the digital certificate, while the received data block is converted back into a hash value with the hash algorithm, and then the two hash values are compared.

Although customized documents can be generated with the help of the system and method referred to above, where it is possible to monitor the logging tasks of these documents and the related processes, as well as the secure transmission, acceptance and storage of the accepted contracts, due to the complexity of the system, the data must go through many authentication processes to produce the final document.

It is an object of the present invention to provide a document authentication system and method that eliminate the disadvantages of the above-mentioned solutions, meet the legal requirements and enable the conclusion of a fully digital contract between a financial service provider and a customer or between any parties, even if one of the parties - typically the customer - does not have an electronic signature.

The solution according to the invention is based on the recognition that if a financial service provider allows its customers to approve transactions with strong customer authentication, then the already available platform of strong customer authentication can also be used to allow customers to sign up within the service provider's application they can also prove their identity with regard to a document requiring mutual signature.

The above objects are achieved by the method according to claim 1 and the system according to claim 8. Preferred embodiments of the system and the method according to the invention are defined by the dependent claims.

The invention will now be described in detail with reference to the drawings. In the drawings:
- Figure 1 is a functional block diagram of the system according to the invention;
- Figure 2 is a communication diagram illustrating the main steps of the method according to the invention.

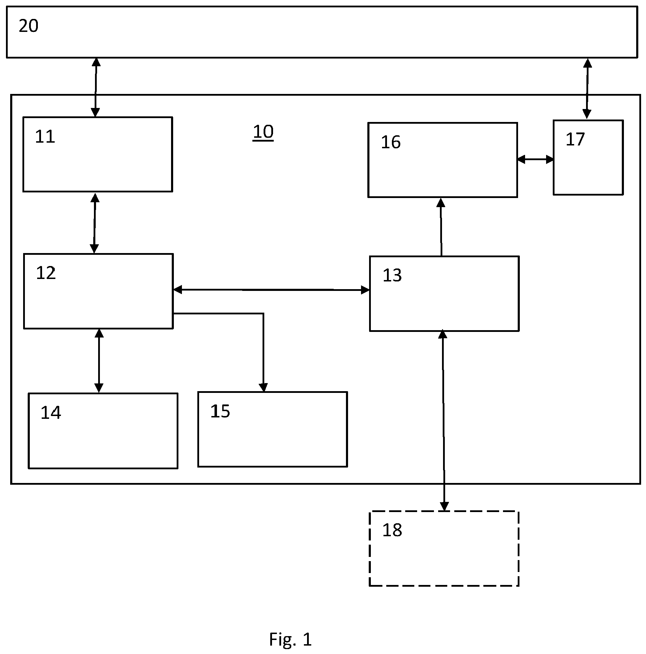

As shown in Figure 1, the document authentication system 10 according to the invention is electronically connected to the service provider's customers via a service provider application running on a server located far from the customers, who use the service via a computing device 20 capable of data communication, typically a PC, a laptop, a tablet, a smartphone, etc. The service provider application includes a request management means 11 that provides the customer with a user interface for entering data and displaying information. Such a user interface may be, for example, the front-end interface of the service provider's application open to the customer, which is typically a graphical I/O interface that can be accessed by the customer through, for example, a browser application. However, the graphical surface of the user interface can also be displayed to the customer through a special computer application or mobile application. The data communication connection between the document authentication system 10 and the customer's computing device 20 may be implemented, for example, via the Internet, a dedicated communication line or a mobile telecommunications network.

The request management means 11 is connected to a document management means 12. The document management means 12 is the central element of the document authentication system 10, to which a document generation means 13, an authentication means 14 and a first database 15 are also connected.

The document generation means 13 is configured to select, from a plurality of pre-stored document templates, the appropriate document template based on the personal data concerning the customer and the contract-related data received from the request management means 11 (which data includes, among others, the hash value of the declaration of the party having no electronic signature), and then personalizes the document template using the customer's personal data and the actual data of the contract.

As a further step, the document generation means 13 provides the personalized document with the service provider's electronic signature and/or a time stamp. Said electronic signature and/or time stamp may be created, for example, by the OnDemand eSign service function, which is preferably provided by a signing means 18 that is part of an external system and uses a common public key encryption infrastructure (Public Key Infrastructure, PKI).

The document generation means 13 preferably generates the personalized document as a document file in PDF format and returns it to the document management means 12.

After the generation of the personalized, electronically signed and time-stamped document, the document authentication system 10 according to the invention performs the identification of the customer using an authentication means 14, which also provides the customer with a graphical user interface for data entry and for displaying data and image information on the customer's computing device 20. The user interface of the authentication means 14 is preferably made available to the customer within the same service provider application as the one used by the request management means 11, but obviously, any other application may also be used for this purpose.

The authentication means 14 is used for performing strong customer authentication to produce the document to be authenticated. Accordingly, the authentication means 14 has one or more different types of communication channels towards the customer, which may be, for example, the Internet, a mobile telecommunications network, a dedicated communication line, etc.

The task of the first database 15 connected to the document management means 12 is to efficiently and permanently store the messages (e.g. log entries, transactions, etc.), various data and information of the various means and applications used for document authentication by the service provider, such as a bank, in the document authentication system 10. For example, the database 15 may be an open-source distributed NoSQL database management system designed to store large amounts of data on low-cost servers with high availability. The database 15 is closed from an IT point of view and has a certificate of closure.

An additional database 16 is connected to the document generation means 13 for performing long-term authentic storage of the authenticated electronic documents signed by both the service provider and the customer. Any informatically closed digital archiving system (DAS) may be suitable for this purpose. Preferably, the 16 database is also certified for IT security.

In a preferred embodiment of the system 10 according to the invention, a document display means 17 is connected to the database 16, with the help of which the customer can remotely access the documents stored in the database 16 and belonging to the given customer, and with the help of which one or more selected documents can be viewed. The document display means 17 is preferably also part of the service provider application used by the service provider.

It is preferred that the various means of the system 10 according to the invention presented above are implemented as software running on a central server computer of the service provider, but some elements, for example the databases 15, 16, may also be implemented as a combination of individual, dedicated hardware and software means.

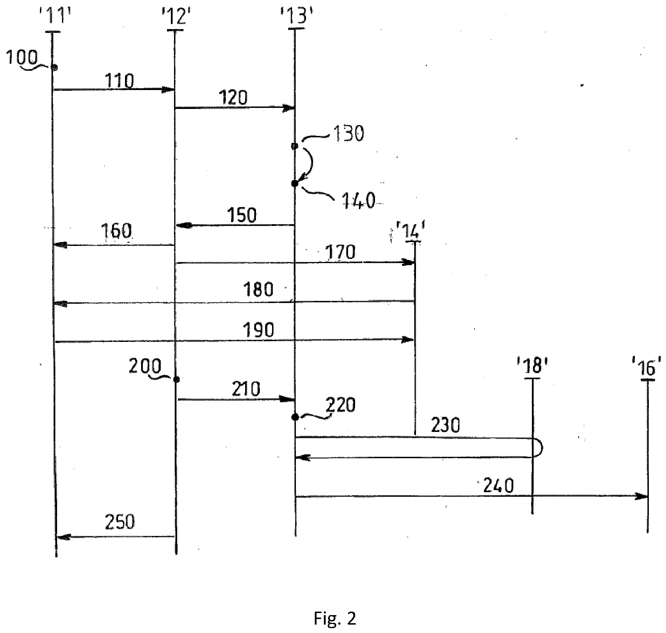

In the following, the computer-implemented document authentication method according to the invention is described with reference to Figure 2. The method is performed in the system 10 according to the invention, using the software and/or hardware means of the system 10. In the first step 100 of the procedure, the customer is identified by performing strong customer authentication using the request management means 11 through the service provider application and store, in the first 15 database, the login data associated with the login procedure. These data preferably include at least the following data: the time of login, registration data of the service provider application, and unique customer ID.

In the next step 110, upon the customer's initiative in the service provider application, a call is made from the request management means 11 to the document management means 12, in which it is indicated that the customer initiates the conclusion of a specific service provider contract. During the call, the request management means 11 transfers, to the document management means 12, the name of the document template stored in the document generation means 13 corresponding to the document to be approved. The means 11 also transfers the raw customer data required for personalizing the document.

In the next step 120, a call is made from the document management means 12 to the document generation means 13, and in the call the name of the document template and the raw customer data required for document personalization are transferred. The fact of the call is preferably logged in the back-end layer of the service provider's application. In the database 15, the so-called document authentication data of the document to be authenticated by the customer is stored. Said document authentication data preferably include at least the following data: ID of the document to be authenticated, name of the document to be authenticated, time of the call sent to the document generation means.

In step 130 of the method, the personalized document is created using the document template 13, which both the customer and the service provider must sign in electronic form. In step 140, the personalized document is provided with the time stamp of the service provider, thereby signing and, at the same time, authenticating the document on behalf of the service provider. To create the service provider's time stamp, the personalized document is preferably handed over to an external signing means 18, which returns the document with the time stamp to the document generating means 13.

The personalized document with the service provider's time stamp is sent back from the document generation means 13 to the document management means 12, which, in step 160, makes the document available to the customer for approval via the front-end interface of the service provider's application open to the customer, with the help of its computing device 20.

If the customer approves the document, in the next step 170, a request for strong customer authentication is sent from the document management means 12 to an authentication means 14, with the help of which, in step 180, the customer is prompted to perform strong customer authentication through the font-end interface of the service provider application open to the customer using the computing device 20, and in step 190, by using the authentication means 14, the authentication data entered by the customer are received, and authentication of the customer is performed. In case of successful authentication, in step 190, the predefined data related to the customer authentication, the so-called customer authentication data, in particular the fact that the authentication was successful, the time and method of authentication (e.g. password, facial, voice-based, fingerprint-based, etc. authentication) are stored in the database 15.

The strong customer authentication (based on multi-factor authentication) may be implemented, for example, with a PUSH message, a QR code, or an SMS-based approval, depending on the computing device 20 the customer uses. In the case of PUSH message-based authentication, the customer's identification is ensured by a PIN code or biometric data sent in the PUSH message to the customer's 20 computing device, as well as the PKI key resolved in this way. With QR code-based authentication, the customer's identification is ensured by a PIN code or biometric data provided by the customer, as well as the PKI key resolved in this way, after scanning the QR code sent to and displayed on the customer's computing device 20. In the case of authentication based on using a one-time time-limited SMS, a so-called one-time password (OTP), the customer is identified by sending a password via SMS to the customer's computing device 20 (in this case, to his/her mobile phone), and receiving the password from the customer via SMS or another communication channel, then the transmitted password and the received password are compared, and if they match, the customer is considered authenticated. The result of strong customer authentication is preferably logged in the back-end layer of the service provider application.

After successfully completing the strong authentication of the customer, we can notify the customer through the service provider application that the contract conclusion process has ended. At the same time, however, we can perform additional steps in the background with the document authentication system 10.

If the strong customer authentication process was unsuccessful in step 190, the document authentication process ends and an appropriate error message is sent to the customer, and the fact of failed customer authentication is preferably also logged in the back-end layer of the service provider application.

In step 200 of the method, using a part of the data logged by the back-end layer of the service provider application and a part of the data stored in the first database 15, in particular the login data, the document authentication data, the customer authentication data, and the unique identifier of the displayed document using the document management means 12, a hash value is generated using a predetermined hash algorithm. Preferably, the hash algorithm is one of the following algorithms: SHA-224, SHA-256, SHA-512/224, SHA-512/256, SHA3-224, SHA3-256, or any other advanced scheme. The hash value generated from the above-mentioned data proves the integrity of those data in the future.

In one embodiment of the method according to the invention, the hash value is generated, instead of the document management means 12, by an external system connected to the database 15, and sent therefrom to the document management means 12.

The hash value generated for the document to be authenticated proves unambiguously that the customer has seen the given draft document containing the final customer data and approved its content, therefore the document supplemented with the hash value is now suitable for permanent storage.

In order to allow long-term storage, the document generation means 13 is called again by the document management means 12 in step 210. During the call, in addition to the data transmitted in the previous call, the hash value is also transferred, which is placed using the document generation means 13, as shown in step 220, in a part of the image of the authenticated document, for example in the lower part of a predetermined page thereof.

In the next step 230 of the method, the document is provided with the service provider's electronic signature using the document generating means 13, preferably the external signing means 18, so that the document can be considered an authentic document signed electronically by both parties.

In step 240, the document produced in this way, signed electronically by both the customer and the service provider, is permanently stored in the second database 16, which is also accessible by the customer, in order to ensure retrievability.

In the last step 250 of the method, a feedback is sent from the document management means 12 to the request management means 11 forming part of the service provider application about the signing of the document by both parties, and now the document authentication process terminates.

In a preferred embodiment of the method according to the invention, the customer can view, at any time, the documents signed jointly with the service provider and stored in the database 16, and the service provider's application provides a suitable user interface for this purpose (e.g. through the "mydocuments service", the customer can access and view his/her own documents in the "My Documents" menu item).

The advantage of the system and the method according to the invention is that by using an already existing electronic administration process of a service provider, a function used for concluding contracts, document authentication, declarations can be created, which fully meet, for example, the legal requirements ruling the financial sector, and does not require any additional effort compared to the usual administration procedures (in particular the personal appearance) on the part of the customers, and which, with appropriate technical implementation, can be used in the case of any legal declaration or contract that is required in written form.

An additional advantage of the system and the method according to the invention is that it can be used to prove what the customer saw (exactly what statement or contractual content was approved), and a connection is established between the fact of approval and the approved process, thereby ensuring non-repudiation. For example, in order to prove the authenticity of a legal statement, the service provider can repeatedly generate the hash value of the contract from the data stored in the database, and by this action, the service provider can easily and quickly prove that the login data, the approval data and the document template data stored in the database are real, so the document has been seen and approved by customer.

Yet another advantage of the system and the method according to the invention is that they do not require the customer's personal presence to conclude a bilateral contract, i.e. it allows fully digital administration, while making it unnecessary for the customer to use a digital signature service provided by a third party, since the electronic signing of the document by the customer is carried out by the strong customer authentication within the service provider's application.

## Claims

1. A computer-implemented method for document authentication, wherein a document of a contract between a service provider and a customer is provided with bilateral authentication, wherein the customer uses a computing device (20) to connect to a service provider application running on a remote server through a communication channel,
**characterized in that** the method comprises the following steps:
- in the service provider application, identifying the customer (100) with strong customer authentication using a request management means (11), and storing the login data relating to a login procedure in a first database (15);
- obtaining (110), by a document management means (12), document authentication data relating to the document to be authenticated and personal data of the customer, and transmitting (120) said data to a document generation means (13);
- generating (130), by the document generation means (13), a personalized document, and providing (140) said personalized document with a time stamp of the service provider;
- sending (160) the time-stamped personalized document to the customer;
- sending (180), by an authentication means (14), a customer authentication request to the customer;
- receiving (190), by the authentication means (14), customer authentication data input by the customer, and said storing customer authentication data in the first database (15);
- generating (200), by the document management means (12), a hash value on the basis of the login data, the document authentication data, the customer authentication data and a unique identifier of the displayed document;
- transmitting (210) the hash value to the document generation means (13);
- placing (220), by the document generation means (13), the hash value in a visible manner on the document to be authenticated;
- providing (230), by the document generation means (13), a combination of the time-stamped, personalized document and the hash value with the service provider's digital signature, thereby creating a document authenticated by both the customer and the service provider;
- permanently storing (240) the authenticated document in a second database (16);
- notifying (250) the request management means (11) by the document management means (12) about the successful completion of the document authentication.

2. The method according to claim 1, wherein the login data includes at least the following data:
login time, registration data of the service provider application, unique customer ID.

3. The method according to claim 1, wherein the document authentication data includes at least the following data:
ID of the document to be authenticated, name of the document to be authenticated, time of the call sent to the document generation means.

4. The method according to claim 1, wherein the customer authentication data includes at least the following data:
type of strong customer authentication, date of strong customer authentication, customer identification data of the strong customer authentication, fact of success.

5. The method according to any one of claims 1 to 4, wherein the hash value is generated using one of the following algorithms:
SHA-224, SHA-256, SHA-512/224, SHA-512/256, SHA3-224, SHA3-256.

6. The method according to any one of claims 1 to 5, wherein the personalized document is produced using a document template pre-stored in the document generation means (13).

7. The method according to any one of the claims 1 to 6, wherein the customer identification data of the strong customer authentication is one of the following:
- PUSH message, wherein the strong customer authentication is ensured by a PIN code or biometric data sent in the PUSH message, as well as a PKI key resolved in this way;
- QR code, wherein the strong customer authentication is ensured by a PIN code or biometric data entered after scanning the QR code, as well as a PKI key resolved in this way;
- one-time, time-limited SMS, wherein the strong customer authentication is ensured by a password received from the customer on the phone number registered for authentication purposes with the service provider after sending the one-time password to the customer.

8. A system (10) for document authentication, in particular for the bilateral authentication of a document of a contract between a service provider and a customer in a service provider application,
**characterized in that** the system (10) comprises:
- a request management means (11) for identifying the customer through strong customer authentication in a service provider application;
- a document management means (12) for
∘ obtaining data on the document to be authenticated and personal data of the customer; and
∘ generating a hash value on the basis of login data, document authentication data, customer authentication data and a unique identifier of the document to be authenticated to; and
∘ indicating the successful completion of the document authentication;
- a document generation means (13) for
∘ producing a personalized document and providing said personalized document with a time stamp of the service provider;
∘ visibly placing a hash value on the document to be authenticated; and
∘ associating a combination of (i) the personalized document having a time stamp and (ii) a hash value with an electronic signature;
- an authentication means (14) for
∘ sending a customer authentication request to the customer and
∘ receiving customer authentication data entered by the customer;
- a first database (15) for storing the login data relating to the login procedure into the service provider application, the document authentication data and the customer authentication data;
- a second database (16) for permanently storing the authenticated document.

9. The document authentication system (10) according to claim 8, further comprising a document display means (17) connected to the second database (16) and forming a part of the service provider application, the document display means being configured to provide the customer with remote access to documents belonging to the customer and stored in the second database (16), and being further configured to display a document selected by the customer.
